# EUROPEAN PATENT SPECIFICATION

(11) **EP 3 263 671 B1**
(45) Date of publication and mention of the grant of the patent: **03.03.2021**
(21) Application number: 17183434.4
(22) Date of filing: 03.03.2006
(51) Int. Cl.: C09K 5/04, C10M 171/00

(54) **COMPOSITIONS COMPRISING CARBON DIOXIDE AND A FLUOROOLEFIN**
ZUSAMMENSETZUNGEN MIT KOHLENDIOXID UND EINEM FLUOROLEFIN
COMPOSITIONS COMPORTANT DIOXYDE DE CARBONE ET UNE FLUOROLÉFINE

(30) Priority: 04.03.2005 US 658543 P; 23.08.2005 US 710439 P; 01.11.2005 US 732769 P
(43) Date of publication of application: 03.01.2018
(62) Divisional of application: 08014611.1
(73) Proprietor: The Chemours Company FC, LLC, Wilmington DE 19801 (US)
(72) Inventor: Rao, Velliyur Nott Mallikarjuna, deceased (US); Minor, Barbara Haviland, Elkton, Maryland 21921 (US)
(74) Representative: Dannenberger, Oliver Andre

(56) References cited:
- US-A- 3 723 318
- US-A- 5 728 902
- US-A1- 2004 256 594
- ORKIN V L ET AL: "Rate constants for the reactions of OH with HFC-245cb (CH3CF2CF3) and some fluoroalkenes (CH2CHCF3, CH2CFCF3, CF2CFCF3, and CF2CF2)", JOURNAL OF PHYSICAL CHEMISTRY. A, MOLECULES, SPECTROSCOPY,KINETICS, ENVIRONMENT AND GENERAL THEORY, WASHINGTON, DC, US, vol. 101, 1 January 1997 (1997-01-01), pages 9118-9124, XP002429691, ISSN: 1089-5639, DOI: 10.1021/JP971994R

## Description

### CROSS REFERENCE(S) TO RELATED APPLICATION(S)

This application claims the priority benefit of U.S. Provisional Application 60/658,543, filed March 4, 2005, and U.S. Provisional Application 60/710,439, filed August 23, 2005, and U.S. Provisional Application 60/732,769, filed November 1, 2005.

### BACKGROUND OF THE INVENTION

### 1. Field of the Invention.

The present invention relates to compositions for use in refrigeration, air-conditioning, and heat pump systems wherein the composition comprises a fluoroolefin and at least one other component. The compositions of the present invention are useful in processes for producing cooling or heat, and as heat transfer fluids.

### 2. Description of Related Art.

The refrigeration industry has been working for the past few decades to find replacement refrigerants for the ozone depleting chlorofluorocarbons (CFCs) and hydrochlorofluorocarbons (HCFCs) being phased out as a result of the Montreal Protocol. The solution for most refrigerant producers has been the commercialization of hydrofluorocarbon (HFC) refrigerants. The new HFC refrigerants, HFC-134a being the most widely used at this time, have zero ozone depletion potential and thus are not affected by the current regulatory phase out as a result of the Montreal Protocol.

Further environmental regulations may ultimately cause global phase out of certain HFC refrigerants. Currently, the automobile industry is facing regulations relating to global warming potential for refrigerants used in mobile air-conditioning. Therefore, there is a great current need to identify new refrigerants with reduced global warming potential for the mobile air-conditioning market. Should the regulations be more broadly applied in the future, an even greater need will be felt for refrigerants that can be used in all areas of the refrigeration and air-conditioning industry.

Currently proposed replacement refrigerants for HFC-134a include HFC-152a, pure hydrocarbons such as butane or propane, or "natural" refrigerants such as CO₂. Many of these suggested replacements are toxic, flammable, and/or have low energy efficiency. Therefore, new alternative refrigerants are being sought.

US 2004/0256594 A1 discloses the use of tetrafluoropropenes in a variety of applications, including refrigeration equipment.

US 3 723 318 A discloses aerosol propellants and refrigerants based on trifluoropropene optionally in combination with further propellants including carbon dioxide.

The object of the present invention is to provide novel refrigerant compositions and heat transfer fluid compositions that provide unique characteristics to meet the demands of low or zero ozone depletion potential and lower global warming potential as compared to current refrigerants.

### BRIEF SUMMARY OF THE INVENTION

The present invention relates to a composition comprising CO₂, a lubricant and a compound selected from HFC-1225ye, HFC-1234yf, and HFC-1234ye, wherein the lubricant is selected from the group consisting of polyol esters, polyalkylene glycols, polyvinyl ethers, mineral oils, alkylbenzenes, synthetic paraffins, synthetic naphthenes, and polyalphaolefins.

The present invention further relates to a composition as defined in claims 2 to 6, to a method as defined in claims 7 to 9, and to a refrigeration apparatus, air-conditioning apparatus or heat pump apparatus as defined in claim 10.

### DETAILED DESCRIPTION OF THE INVENTION

The present invention relates to compositions comprising CO₂, a lubricant and a compound selected from HFC-1225ye, HFC-1234yf, and HFC-1234ye, wherein the lubricant is selected from the group consisting of polyol esters, polyalkylene glycols, polyvinyl ethers, mineral oils, alkylbenzenes, synthetic paraffins, synthetic naphthenes, and polyalphaolefins.

Fluoroolefin compounds and other compounds are listed in Table 1.

**TABLE 1**

| **Compound** | **Chemical name** | **Chemical formula** |
|---|---|---|
| HFC-1225ye | 1,2,3,3,3-pentafluoropropene | CF₃CF=CHF |
| HFC-1234ze | 1,3,3,3-tetrafluoropropene | CF₃CH=CHF |
| HFC-1234yf | 2,3,3,3-tetrafluoropropene | CF₃CF=CH₂ |
| HFC-1234ye | 1,2,3,3-tetrafluoropropene | CHF₂CF=CHF |
| HFC-1243zf | 3,3,3-trifluoropropene | CF₃CH=CH₂ |
| HFC-32 | difluoromethane | CH₂F₂ |
| HFC-125 | pentafluoroethane | CF₃CHF₂ |
| HFC-134 | 1,1,2,2-tetrafluoroethane | CHF₂CHF₂ |
| HFC-134a | 1,1,1,2-tetrafluoroethane | CH₂FCF₃ |
| HFC-143a | 1,1,1-trifluoroethane | CH₃CF₃ |
| HFC-152a | 1,1-difluoroethane | CHF2CH3 |
| HFC-161 | fluoroethane | CH3CH2F |
| HFC-227ea | 1,1,1,2,3,3,3-heptafluoropropane | CF₃CHFCF₃ |
| HFC-236ea | 1,1,1,2,3,3-hexafluoropropane | CF₃CHFCHF₂ |
| HFC-236fa | 1,1,1,3,3,3-hexafluoroethane | CF₃CH₂CF₃ |
| HFC-245fa | 1,1,1,3,3-pentafluoropropane | CF₃CH₂CHF₂ |
| HFC-365mfc | 1,1,1,3,3-pentafluorobutane | CF₃CH₂CH₂CHF₂ |
| | propane | CH₃CH₂CH₃ |
| | n-butane | CH₃CH₂CH₂CH₃ |
| i-butane | isobutane | CH₃CH(CH₃)CH₃ |
| | 2-methylbutane | CH₃CH(CH₃)CH₂CH₃ |
| | n-pentane | CH₃CH₂CH₂CH₂CH₃ |
| | cyclopentane | cyclo-(CH₂)₅- |
| DME | dimethylether | CH₃OCH₃ |
| CO₂ | carbon dioxide | CO₂ |
| CF₃SCF₃ | bis(trifluoromethyl)sulfide | CF₃SCF₃ |
| | iodotrifluoromethane | CF₃l |

The individual components listed in Table 1 may be prepared by methods known in the art.

The fluoroolefin compounds used in the compositions of the present invention, HFC-1225ye, and HFC-1234ye, may exist as different configurational isomers or stereoisomers. The present invention is intended to include all single configurational isomers, single stereoisomers or any combination or mixture thereof. For instance, HFC-1225ye is meant to represent the cis-isomer, trans-isomer, or any combination or mixture of both isomers in any ratio.

The compositions of the present invention include, in addition to the lubricant as defined above, the following:
HFC-1225ye and at least CO₂;
HFC-1234yf and at least CO₂; or
HFC-1234ye and at least CO₂.

The compositions of the present invention may be generally useful when the fluoroolefin is present at 1 weight percent to 99 weight percent, preferably 20 weight percent to 99 weight percent, more preferably 40 weight percent to 99 weight percent and still more preferably 50 weight percent to 99 weight percent.

The present invention further provides compositions as listed in Table 2.

**TABLE 2**

| **Components** | **Concentration ranges (wt%)** | | |
|---|---|---|---|
| | **Preferred** | **More preferred** | **Most preferred** |
| HFC-1225ye/CO₂ | 0.1-99.9/99.9-0.1 | 70-99.3/30-0.3 | 99/1 |
| HFC-1225ye/HFC-152a/CO₂ | 1-98/1-98/0.1-98 | 50-98/1-40/0.3-30 | 84/15/1 |
| | | | 84/15.5/0.5 |
| HFC-1225ye/HFC-134a/CO₂ | 1-98/1-98/0.1-98 | 40-98/1-50/0.3-30 | 88.5/11/0.5 |

The most preferred compositions of the present invention listed in Table 2 are generally expected to maintain the desired properties and functionality when the components are present in the concentrations as listed +/- 2 weight percent. The compositions containing CO₂ would be expected to maintain the desired properties and functionality when the CO₂ was present at the listed concentration +/- 0.2 weight percent.

The compositions of the present invention may be prepared by any convenient method to combine the desired amounts of the individual components. A preferred method is to weigh the desired component amounts and thereafter combine the components in an appropriate vessel. Agitation may be used, if desired.

An alternative means for making compositions of the present invention may be a method for making a refrigerant blend composition, wherein said refrigerant blend composition comprises a composition as disclosed herein, said method comprising (i) reclaiming a volume of one or more components of a refrigerant composition from at least one refrigerant container, (ii) removing impurities sufficiently to enable reuse of said one or more of the reclaimed components, (iii) and optionally, combining all or part of said reclaimed volume of components with at least one additional refrigerant composition or component.

A refrigerant container may be any container in which is stored a refrigerant blend composition that has been used in a refrigeration apparatus, air-conditioning apparatus or heat pump apparatus. Said refrigerant container may be the refrigeration apparatus, air-conditioning apparatus or heat pump apparatus in which the refrigerant blend was used. Additionally, the refrigerant container may be a storage container for collecting reclaimed refrigerant blend components, including but not limited to pressurized gas cylinders.

Residual refrigerant means any amount of refrigerant blend or refrigerant blend component that may be moved out of the refrigerant container by any method known for transferring refrigerant blends or refrigerant blend components.

Impurities may be any component that is in the refrigerant blend or refrigerant blend component due to its use in a refrigeration apparatus, air-conditioning apparatus or heat pump apparatus. Such impurities include but are not limited to refrigeration lubricants, being those described earlier herein, particulates including but not limited to metal, metal salt or elastomer particles, that may have come out of the refrigeration apparatus, air-conditioning apparatus or heat pump apparatus, and any other contaminants that may adversely effect the performance of the refrigerant blend composition.

Such impurities may be removed sufficiently to allow reuse of the refrigerant blend or refrigerant blend component without adversely effecting the performance or equipment within which the refrigerant blend or refrigerant blend component will be used.

It may be necessary to provide additional refrigerant blend or refrigerant blend component to the residual refrigerant blend or refrigerant blend component in order to produce a composition that meets the specifications required for a given product. For instance, if a refrigerant blend has 3 components in a particular weight percentage range, it may be necessary to add one or more of the components in a given amount in order to restore the composition to within the specification limits.

Compositions of the present invention have zero or low ozone depletion potential and low global warming potential (GWP). Additionally, the compositions of the present invention will have global warming potentials that are less than many hydrofluorocarbon refrigerants currently in use. One aspect of the present invention is to provide a refrigerant with a global warming potential of less than 1000, less than 500, less than 150, less than 100, or less than 50. Another aspect of the present invention is to reduce the net GWP of refrigerant mixtures by adding fluoroolefins to said mixtures.

The compositions of the present invention may be useful as low global warming potential (GWP) replacements for currently used refrigerants, including but not limited to R134a (or HFC-134a, 1,1,1,2-tetrafluoroethane), R22 (or HCFC-22, chlorodifluoromethane), R123 (or HFC-123, 2,2-dichloro-1,1,1-trifluoroethane), R11 (CFC-11, fluorotrichloromethane), R12 (CFC-12, dichlorodifluoromethane), R245fa (or HFC-245fa, 1,1,1,3,3-pentafluoropropane), R114 (or CFC-114, 1,2-dichloro-1,1,2,2-tetrafluoroethane), R236fa (or HFC-236fa, 1,1,1,3,3,3-hexafluoropropane), R124 (or HCFC-124, 2-chloro-1,1,1,2-tetrafluoroethane), R407C (ASHRAE designation for a blend of 52 weight percent R134a, 25 weight percent R125 (pentafluoroethane), and 23 weight percent R32 (difluoromethane), R410A (ASHRAE designation for a blend of 50 weight percent R125 and 50 weight percent R32), R417A, (ASHRAE designation for a blend of 46.6 weight percent R125, 50.0 weight percent R134a, and 3.4 weight percent n-butane), R422A (ASHRAE designation for a blend of 85.1 weight percent R125, 11.5 weight percent R134a, and 3.4 weight percent isobutane), R404A, (ASHRAE designation for a blend of 44 weight percent R125, 52 weight percent R143a (1,1,1-trifluoroethane), and 4.0 weight percent R134a) and R507A (ASHRAE designation for a blend of 50 weight percent R125 and 50 weight percent R143a). Additionally, the compositions of the present invention may be useful as replacements for R12 (CFC-12, dichlorodifluoromethane) or R502 (ASHRAE designation for a blend of 51.2 weight percent CFC-115 (chloropentafluoroethane) and 48.8 weight percent HCFC-22).

Often replacement refrigerants are most useful if capable of being used in the original refrigeration equipment designed for a different refrigerant. The compositions of the present invention may be useful as replacements for the above-mentioned refrigerants in original equipment. Additionally, the compositions of the present invention may be useful as replacements for the above mentioned refrigerants in equipment designed to use the above-mentioned refrigerants.

The compositions of the present invention further comprise a lubricant.

Lubricants of the present invention comprise refrigeration lubricants, i.e. those lubricants suitable for use with refrigeration, air-conditioning, or heat pump apparatus. Among these lubricants are those conventionally used in compression refrigeration apparatus utilizing chlorofluorocarbon refrigerants. Such lubricants and their properties are discussed in the 1990 ASHRAE Handbook, Refrigeration Systems and Applications, chapter 8, titled "Lubricants in Refrigeration Systems", pages 8.1 through 8.21. Lubricants of the present invention may comprise those commonly known as "mineral oils" in the field of compression refrigeration lubrication. Mineral oils comprise paraffins (i.e. straight-chain and branched-carbon-chain, saturated hydrocarbons), naphthenes (i.e. cyclic paraffins) and aromatics (i.e. unsaturated, cyclic hydrocarbons containing one or more rings characterized by alternating double bonds). Lubricants of the present invention further comprise those commonly known as "synthetic oils" in the field of compression refrigeration lubrication. Synthetic oils comprise alkylaryls (i.e. linear and branched alkyl alkylbenzenes), synthetic paraffins and napthenes, and poly(alphaolefins). Representative conventional lubricants of the present invention are the commercially available BVM 100 N (paraffinic mineral oil sold by BVA Oils), Suniso® 3GS and Suniso® 5GS (naphthenic mineral oil sold by Crompton Co.), Sontex® 372LT (naphthenic mineral oil sold by Pennzoil), Calumet® RO-30 (naphthenic mineral oil sold by Calumet Lubricants), Zerol® 75, Zerol® 150 and Zerol® 500 (linear alkylbenzenes sold by Shrieve Chemicals) and HAB 22 (branched alkylbenzene sold by Nippon Oil).

Lubricants of the present invention further comprise those that have been designed for use with hydrofluorocarbon refrigerants and are miscible with refrigerants of the present invention under compression refrigeration, air-conditioning, or heat pump apparatus' operating conditions. Such lubricants and their properties are discussed in "Synthetic Lubricants and High-Performance Fluids", R. L. Shubkin, editor, Marcel Dekker, 1993. Such lubricants include, but are not limited to, polyol esters (POEs) such as Castrol® 100 (Castrol, United Kingdom), polyalkylene glycols (PAGs) such as RL-488A from Dow (Dow Chemical, Midland, Michigan), and polyvinyl ethers (PVEs). These lubricants are readily available from various commercial sources.

Lubricants of the present invention are selected by considering a given compressor's requirements and the environment to which the lubricant will be exposed. Lubricants of the present invention preferably have a kinematic viscosity of at least 5 cs (centistokes) at 40°C.

Commonly used refrigeration system additives may optionally be added, as desired, to compositions of the present invention in order to enhance lubricity and system stability. These additives are generally known within the field of refrigeration compressor lubrication, and include anti wear agents, extreme pressure lubricants, corrosion and oxidation inhibitors, metal surface deactivators, free radical scavengers, foaming and antifoam control agents, leak detectants and the like. In general, these additives are present only in small amounts relative to the overall lubricant composition. They are typically used at concentrations of from less than 0.1 % to as much as 3 % of each additive. These additives are selected on the basis of the individual system requirements. Some typical examples of such additives may include, but are not limited to, lubrication enhancing additives, such as alkyl or aryl esters of phosphoric acid and of thiophosphates. Additionally, the metal dialkyl dithiophosphates (e.g. zinc dialkyl dithiophosphate or ZDDP, Lubrizol 1375) and other members of this family of chemicals may be used in compositions of the present invention. Other antiwear additives include natural product oils and assymetrical polyhydroxyl lubrication additives such as Synergol TMS (International Lubricants). Similarly, stabilizers such as anti oxidants, free radical scavengers, and water scavengers may be employed. Compounds in this category can include, but are not limited to, butylated hydroxy toluene (BHT) and epoxides.

The present invention further relates to a method for replacing a high GWP refrigerant in a refrigeration, air-conditioning, or heat pump apparatus, wherein said high GWP refrigerant is selected from the group consisting of R134a, R22, R245fa, R114, R236fa, R124, R410A, R407C, R417A, R422A, R507A, and R404A, said method comprising providing a composition of the present invention to said refrigeration, air-conditioning, or heat pump apparatus that uses, used or is designed to use said high GWP refrigerant.

Vapor-compression refrigeration, air-conditioning, or heat pump systems include an evaporator, a compressor, a condenser, and an expansion device. A vapor-compression cycle re-uses refrigerant in multiple steps producing a cooling effect in one step and a heating effect in a different step. The cycle can be described simply as follows. Liquid refrigerant enters an evaporator through an expansion device, and the liquid refrigerant boils in the evaporator at a low temperature to form a gas and produce cooling. The low-pressure gas enters a compressor where the gas is compressed to raise its pressure and temperature. The higher-pressure (compressed) gaseous refrigerant then enters the condenser in which the refrigerant condenses and discharges its heat to the environment. The refrigerant returns to the expansion device through which the liquid expands from the higher-pressure level in the condenser to the low-pressure level in the evaporator, thus repeating the cycle.

As used herein, mobile refrigeration apparatus or mobile air-conditioning apparatus refers to any refrigeration or air-conditioning apparatus incorporated into a transportation unit for the road, rail, sea or air. In addition, apparatus, which are meant to provide refrigeration or air-conditioning for a system independent of any moving carrier, known as "intermodal" systems, are included in the present invention. Such intermodal systems include "containers" (combined sea/land transport) as well as "swap bodies" (combined road and rail transport). The present invention is particularly useful for road transport refrigerating or air-conditioning apparatus, such as automobile air-conditioning apparatus or refrigerated road transport equipment.

The present invention further relates to a process for producing cooling comprising evaporating the compositions of the present invention in the vicinity of a body to be cooled, and thereafter condensing said compositions.

The present invention further relates to a process for producing heat comprising condensing the compositions of the present invention in the vicinity of a body to be heated, and thereafter evaporating said compositions.

The present invention further relates to a refrigeration, air-conditioning, or heat pump apparatus containing a composition of the present invention.

The present invention further relates to a mobile air-conditioning apparatus containing a composition of the present invention.

Further described herein is a method for early detection of a refrigerant leak in a refrigeration, air-conditioning or heat pump apparatus said method comprising using a non-azeotropic composition in said apparatus, and monitoring for a reduction in cooling performance. The non-azeotropic compositions will fractionate upon leakage from a refrigeration, air-conditioning or heat pump apparatus and the lower boiling (higher vapor pressure) component will leak out of the apparatus first. When this occurs, if the lower boiling component in that composition provides the majority of the refrigeration capacity, there will be a marked reduction in the capacity and thus performance of the apparatus. In an automobile air-conditioning system, as an example, the passengers in the automobile will detect a reduction in the cooling capability of the system. This reduction in cooling capability can be interpreted to mean that refrigerant is being leaked and that the system requires repair.

Further described herein is a method of using the compositions of the present invention as a heat transfer fluid composition, said process comprising transporting said composition from a heat source to a heat sink.

Heat transfer fluids are utilized to transfer, move or remove heat from one space, location, object or body to a different space, location, object or body by radiation, conduction, or convection. A heat transfer fluid may function as a secondary coolant by providing means of transfer for cooling (or heating) from a remote refrigeration (or heating) system. In some systems, the heat transfer fluid may remain in a constant state throughout the transfer process (i.e., not evaporate or condense). Alternatively, evaporative cooling processes may utilize heat transfer fluids as well.

A heat source may be defined as any space, location, object or body from which it is desirable to transfer, move or remove heat. Examples of heat sources may be spaces (open or enclosed) requiring refrigeration or cooling, such as refrigerator or freezer cases in a supermarket, building spaces requiring air-conditioning, or the passenger compartment of an automobile requiring air-conditioning. A heat sink may be defined as any space, location, object or body capable of absorbing heat. A vapor compression refrigeration system is one example of such a heat sink.

### EXAMPLES

### EXAMPLE 1

### Refrigeration Performance Data

Table 3 shows the performance of various refrigerant compositions of the present invention as compared to HFC-134a. In Table 3, Evap Pres is evaporator pressure, Cond Pres is condenser pressure, Comp Disch T is compressor discharge temperature, COP is energy efficiency, and CAP is capacity. The data are based on the following conditions.

| | |
|---|---|
| Evaporator temperature | 40.0°F (4.4°C) |
| Condenser temperature | 130.0°F (54.4°C) |
| Subcool temperature | 10.0°F (5.5°C) |
| Return gas temperature | 60.0°F (15.6°C) |
| Compressor efficiency is | 100% |

Note that the superheat is included in cooling capacity calculations.

**TABLE 3**

| **Composition (wt%)** | **Evap Pres (Psia)** | **Evap Pres (kPa)** | **Cond Pres (Psia)** | **Cond Pres (kPa)** | **Comp Disch T (F)** | **Comp Disch T (C)** | **Cap (Btumin)** | **Cap (kW)** | **COP** |
|---|---|---|---|---|---|---|---|---|---|
| HFC-134a | 50.3 | 346 | 214 | 1476 | 156 | 68.9 | 213 | 3.73 | 4.41 |
| HFC-1225ye/CO₂ (99/1) | 43.2 | 298 | 179 | 1234 | 146 | 63.3 | 177 | 3.10 | 4.63 |
| HFC-1225ye/HFC-134a/CO₂ (88.5/11/.5) | 42.4 | 292 | 180 | 1241 | 147 | 63.9 | 182 | 3.18 | 4.51 |
| HFC-1225ye/HFC-152a/CO₂ (84/15/1) | 44.8 | 309 | 185 | 1276 | 151 | 66.1 | 195 | 342 | 464 |
| HFC-1225ye/HFC-152a/CO₂ (84/15.5/0.5) | 42.3 | 292 | 179 | 1234 | 151 | 66.1 | 184 | 322 | 4.55 |

The compositions have even higher energy efficiency (COP) than HFC-134a while maintaining lower discharge pressures and temperatures. Capacity for the present compositions is also similar to R134a indicating these could be replacement refrigerants for R134a in refrigeration and air-conditioning, and in mobile air-conditioning applications in particular.

## Claims

1. A composition comprising CO₂, a lubricant and a compound selected from HFC-1225ye, HFC-1234yf, and HFC-1234ye, wherein the lubricant is selected from the group consisting of polyol esters, polyalkylene glycols, polyvinyl ethers, mineral oils, alkylbenzenes, synthetic paraffins, synthetic naphthenes, and polyalphaolefins.

2. The composition of claim 1, comprising CO₂, a lubricant and 1 to 99 weight percent HFC-1225ye, 1 to 99 weight percent HFC-1234yf, or 1 to 99 weight percent HFC-1234ye.

3. The composition of claim 1 or 2, comprising CO₂, a lubricant and
20 to 99 weight percent HFC-1225ye, preferably 40 to 99 weight percent HFC-1225ye, more preferably 50 to 99 weight percent HFC-1225ye;
20 to 99 weight percent HFC-1234yf, preferably 40 to 99 weight percent HFC-1234yf, more preferably 50 to 99 weight percent HFC-1234yf; or
20 to 99 weight percent HFC-1234ye, preferably 40 to 99 weight percent HFC-1234ye, more preferably 50 to 99 weight percent HFC-1234ye.

4. The composition of claim 1 or 2, comprising CO₂, a lubricant and 1 to 99 weight percent HFC-1234yf, preferably 20 to 99 weight percent HFC-1234yf, more preferably 40 to 99 weight percent HFC-1234yf, and most preferably 50 to 99 weight percent HFC-1234yf.

5. The composition of claim 1, 2 or 3, comprising a lubricant, and
0.1 to 99.9 weight percent HFC-1225ye and 99.9 to 0.1 weight percent CO₂, preferably 70 to 99.3 weight percent HFC-1225ye and 30 to 0.3 CO₂, more preferably 99 weight percent HFC-1225ye and 1 weight percent CO₂;
1 to 98 weight percent HFC-1225ye, 1 to 98 weight percent HFC-152a, and 0.1 to 98 weight percent CO₂, preferably 50 to 98 weight percent HFC-1225ye, 1 to 40 weight percent HFC-152a, and 0.3 to 30 weight percent CO₂, more preferably 84 weight percent HFC-1225ye, 15 weight percent HFC-152a, and 1 weight percent CO₂, or 84 weight percent HFC-1225ye, 15.5 weight percent HFC-152a, and 0.5 weight percent CO₂; or
1 to 98 weight percent HFC-1225ye, 1 to 98 weight percent HFC-134a, and 0.1 to 98 weight percent CO₂, preferably 40 to 98 weight percent HFC-1225ye, 1 to 50 weight percent HFC-134a, and 0.3 to 30 weight percent CO₂, more preferably 88.5 weight percent HFC-1225ye, 11 weight percent HFC-134a, and 0.5 weight percent CO₂.

6. The composition of claim 1, 2, 3, or 5, wherein HFC-1225ye is cis-HFC-1225ye, trans-HFC-1225ye or a mixture of cis-HFC-1225ye and trans-HFC-1225ye, or HFC-1234ye is cis-HFC-1234ye, trans-HFC-1234ye or a mixture of cis-HFC-1234ye and trans-HFC-1234ye.

7. A method of producing cooling, the method comprising: evaporating the composition of any one of claims 1 to 6 in the vicinity of a body to be cooled and thereafter condensing the composition.

8. A method of producing heating, the method comprising: condensing the composition of any one of claims 1 to 6 in the vicinity of a body to be heated and thereafter evaporating the composition.

9. A method for replacing a high GWP refrigerant in a refrigeration, air conditioning, or heat pump apparatus, wherein the high GWP refrigerant is selected from the group consisting of R134a, R22, R123, R11, R245fa, R114, R236fa, R124, R12, R410A, R407C, R417A, R422A, R507A, R502, and R404A, the method comprising providing the composition of any one of claims 1 to 6 to the refrigeration, air conditioning, or heat pump apparatus that uses, used or is designed to use the high GWP refrigerant.

10. A refrigeration apparatus, air-conditioning apparatus, or heat pump apparatus containing the composition of any one of claims 1 to 6, wherein the refrigeration apparatus preferably is a mobile refrigeration apparatus and the air-conditioning apparatus preferably is a mobile air-conditioning apparatus, more preferably an automobile air-conditioning apparatus.

## Patentansprüche

1. Zusammensetzung, umfassend CO₂, ein Schmiermittel und eine Verbindung ausgewählt aus HFC-1225ye, HFC-1234yf und HFC-1234ye, wobei das Schmiermittel ausgewählt ist aus der Gruppe bestehend aus Polyolestern, Polyalkylenglycolen, Polyvinylethern, Mineralölen, Alkylbenzolen, synthetischen Paraffinen, synthetischen Naphthenen und Polyalphaolefinen.

2. Zusammensetzung nach Anspruch 1, umfassend CO₂, ein Schmiermittel und zu 1 bis 99 Gewichtsprozent HFC-1225ye, zu 1 bis 99 Gewichtsprozent HFC-1234yf oder zu 1 bis 99 Gewichtsprozent HFC-1234ye.

3. Zusammensetzung nach Anspruch 1 oder 2, umfassend CO₂, ein Schmiermittel und
zu 20 bis 99 Gewichtsprozent HFC-1225ye, vorzugsweise zu 40 bis 99 Gewichtsprozent HFC-1225ye, mehr bevorzugt zu 50 bis 99 Gewichtsprozent HFC-1225ye;
zu 20 bis 99 Gewichtsprozent HFC-1234yf, vorzugsweise zu 40 bis 99 Gewichtsprozent HFC-1234yf, mehr bevorzugt zu 50 bis 99 Gewichtsprozent HFC-1234yf; oder
zu 20 bis 99 Gewichtsprozent HFC-1234ye, vorzugsweise zu 40 bis 99 Gewichtsprozent HFC-1234ye, mehr bevorzugt zu 50 bis 99 Gewichtsprozent HFC-1234ye.

4. Zusammensetzung nach Anspruch 1 oder 2, umfassend CO₂, ein Schmiermittel und zu 1 bis 99 Gewichtsprozent HFC-1234yf, vorzugsweise zu 20 bis 99 Gewichtsprozent HFC-1234yf, mehr bevorzugt zu 40 bis 99 Gewichtsprozent HFC-1234yf und am meisten bevorzugt zu 50 bis 99 Gewichtsprozent HFC-1234yf.

5. Zusammensetzung nach Anspruch 1, 2 oder 3, umfassend ein Schmiermittel und
zu 0,1 bis 99,9 Gewichtsprozent HFC-1225ye und zu 99,9 bis 0,1 Gewichtsprozent CO₂, vorzugsweise zu 70 bis 99,3 Gewichtsprozent HFC-1225ye und zu 30 bis 0,3 CO₂, mehr bevorzugt zu 99 Gewichtsprozent HFC-1225ye und zu 1 Gewichtsprozent CO₂;
zu 1 bis 98 Gewichtsprozent HFC-1225ye, zu 1 bis 98 Gewichtsprozent HFC-152a und zu 0,1 bis 98 Gewichtsprozent CO₂, vorzugsweise zu 50 bis 98 Gewichtsprozent HFC-1225ye, zu 1 bis 40 Gewichtsprozent HFC-152a und zu 0,3 bis 30 Gewichtsprozent CO₂,
mehr bevorzugt zu 84 Gewichtsprozent HFC-1225ye, zu 15 Gewichtsprozent HFC-152a und zu 1 Gewichtsprozent CO₂ oder zu 84 Gewichtsprozent HFC-1225ye, zu 15,5 Gewichtsprozent HFC-152a und zu 0,5 Gewichtsprozent CO₂; oder
zu 1 bis 98 Gewichtsprozent HFC-1225ye, zu 1 bis 98 Gewichtsprozent HFC-134 a und zu 0,1 bis 98 Gewichtsprozent CO₂, vorzugsweise zu 40 bis 98 Gewichtsprozent HFC-1225ye, zu 1 bis 50 Gewichtsprozent HFC-134a und zu 0,3 bis 30 Gewichtsprozent CO₂, mehr bevorzugt zu 88,5 Gewichtsprozent HFC-1225ye, zu 11 Gewichtsprozent HFC-134a und zu 0,5 Gewichtsprozent CO₂.

6. Zusammensetzung nach Anspruch 1, 2, 3 oder 5, wobei HFC-1225ye cis-HFC-1225ye, trans-HFC-1225ye oder eine Mischung von cis-HFC-1225ye und trans-HFC-1225ye ist oder HFC-1234ye cis-HFC-1234ye, trans-HFC-1234ye oder eine Mischung von cis-HFC-1234ye und trans-HFC-1234ye ist.

7. Verfahren zum Erzeugen von Kühlung, wobei das Verfahren Folgendes umfasst: Verdampfen einer Zusammensetzung nach einem der Ansprüche 1 bis 6 in der Nähe eines zu kühlenden Körpers und danach Kondensieren der Zusammensetzung.

8. Verfahren zum Erzeugen von Wärme, wobei das Verfahren Folgendes umfasst: Kondensieren einer Zusammensetzung nach einem der Ansprüche 1 bis 6 in der Nähe eines zu erwärmenden Körpers und danach Verdampfen der Zusammensetzung.

9. Verfahren zum Ersetzen eines Kältemittels mit einem hohem GWP in einer Kälte-, Klimaanlagen- oder Wärmepumpenvorrichtung, wobei das Kältemittel mit hohem GWP ausgewählt ist aus der Gruppe bestehend aus R134a, R22, R123, R11, R245fa, R114, R236fa, R124, R12, R410A, R407C, R417A, R422A, R507A, R502 und R404A, wobei das Verfahren das Bereitstellen der Zusammensetzung nach einem der Ansprüche 1 bis 6 für die Kälte-, Klimaanlagen- oder Wärmepumpenvorrichtung, die das Kältemittel mit hohem GWP verwendet, verwendet hat oder für dessen Verwendung ausgelegt ist, umfasst.

10. Kältevorrichtung, Klimatisierungsvorrichtung oder Wärmepumpenvorrichtung, die die Zusammensetzung nach einem der Ansprüche 1 bis 6 enthält, wobei die Kältevorrichtung vorzugsweise eine mobile Kältevorrichtung ist und die Klimatisierungsvorrichtung vorzugsweise eine mobile Klimatisierungsvorrichtung ist, mehr bevorzugt eine Automobilklimatisierungsvorrichtung.

## Revendications

1. Composition comprenant du CO₂, un lubrifiant et un composé choisi parmi HFC-1225ye, HFC-1234yf et HFC-1234ye, dans laquelle le lubrifiant est choisi dans le groupe constitué d'esters de polyol, polyalkylène glycols, éthers de polyvinyle, huiles minérales, alkylbenzènes, paraffines synthétiques, naphtènes synthétiques, et polyalpha-oléfines.

2. Composition selon la revendication 1, comprenant du CO₂, un lubrifiant et 1 à 99 pour cent en poids de HFC-1225ye, 1 à 99 pour cent en poids de HFC-1234yf, ou 1 à 99 pour cent en poids de HFC-1234ye.

3. Composition selon la revendication 1 ou 2, comprenant du CO₂, un lubrifiant et
20 à 99 pour cent en poids de HFC-1225ye, de préférence 40 à 99 pour cent en poids de HFC-1225ye, plus préférablement 50 à 99 pour cent en poids de HFC-1225ye ;
20 à 99 pour cent en poids de HFC-1234yf, de préférence 40 à 99 pour cent en poids de HFC-1234yf, plus préférablement 50 à 99 pour cent en poids de HFC-1234yf ; ou
20 à 99 pour cent en poids de HFC-1234ye, de préférence 40 à 99 pour cent en poids de HFC-1234ye, plus préférablement 50 à 99 pour cent en poids de HFC-1234ye.

4. Composition selon la revendication 1 ou 2, comprenant du CO₂, un lubrifiant et 1 à 99 pour cent en poids de HFC-1234yf, de préférence 20 à 99 pour cent en poids de HFC-1234yf, plus préférablement 40 à 99 pour cent en poids de HFC-1234yf, et le plus préférablement 50 à 99 pour cent en poids de HFC-1234yf.

5. Composition selon la revendication 1, 2 ou 3, comprenant un lubrifiant, et
0,1 à 99,9 pour cent en poids de HFC-1225ye et 99,9 à 0,1 pour cent en poids de CO₂, de préférence 70 à 99,3 pour cent en poids de HFC-1225ye et 30 à 0,3 de CO₂, plus préférablement 99 pour cent en poids de HFC-1225ye et 1 pour cent en poids de CO₂ ;
1 à 98 pour cent en poids de HFC-1225ye, 1 à 98 pour cent en poids de HFC-152a, et 0,1 à 98 pour cent en poids de CO₂, de préférence 50 à 98 pour cent en poids de HFC-1225ye, 1 à 40 pour cent en poids de HFC-152a, et 0,3 à 30 pour cent en poids de CO₂,
plus préférablement 84 pour cent en poids de HFC-1225ye, 15 pour cent en poids de HFC-152a, et 1 pour cent en poids de CO₂, ou 84 pour cent en poids de HFC-1225ye, 15,5 pour cent en poids de HFC-152a, et 0,5 pour cent en poids de CO₂ ; ou
1 à 98 pour cent en poids de HFC-1225ye, 1 à 98 pour cent en poids de HFC-134a, et 0,1 à 98 pour cent en poids de CO₂, de préférence 40 à 98 pour cent en poids de HFC-1225ye, 1 à 50 pour cent en poids de HFC-134a, et 0,3 à 30 pour cent en poids de CO₂, plus préférablement 88,5 pour cent en poids de HFC-1225ye, 11 pour cent en poids de HFC-134a, et 0,5 pour cent en poids de CO₂.

6. Composition selon la revendication 1, 2, 3, ou 5, dans laquelle HFC-1225ye est cis-HFC-1225ye, trans-HFC-1225ye ou un mélange de cis-HFC-1225ye et de trans-HFC-1225ye, ou HFC-1234ye est cis-HFC-1234ye, trans-HFC-1234ye ou un mélange de cis-HFC-1234ye et de trans-HFC-1234ye.

7. Procédé de production d'un refroidissement, le procédé comprenant :
l'évaporation de la composition selon l'une quelconque des revendications 1 à 6 au voisinage d'un corps à refroidir et par la suite la condensation de la composition.

8. Procédé de production d'un chauffage, le procédé comprenant : la condensation de la composition selon l'une quelconque des revendications 1 à 6 au voisinage d'un corps à chauffer et par la suite l'évaporation de la composition.

9. Procédé de remplacement d'un réfrigérant à haut PRG dans un appareil de réfrigération, de climatisation ou de pompe à chaleur, dans lequel le réfrigérant à haut PRG est choisi dans le groupe constitué de R134a, R22, R123, R11, R245fa, R114, R236fa, R124, R12, R410A, R407C, R417A, R422A, R507A, R502, et R404A, le procédé comprenant la fourniture de la composition selon l'une quelconque des revendications 1 à 6 à l'appareil de réfrigération, de climatisation ou de pompe à chaleur qui utilise, a utilisé ou est conçu pour utiliser le réfrigérant à haut PRG.

10. Appareil de réfrigération, appareil de climatisation, ou appareil de pompe à chaleur contenant la composition selon l'une quelconque des revendications 1 à 6, dans lequel l'appareil de réfrigération est de préférence un appareil de réfrigération mobile et l'appareil de climatisation est de préférence un appareil de climatisation mobile, plus préférablement un appareil de climatisation d'automobile.
